# EUROPÄISCHE PATENTSCHRIFT

(11) **EP 3 421 843 B1**
(45) Veröffentlichungstag und Bekanntmachung des Hinweises auf die Patenterteilung: **04.08.2021**
(21) Anmeldenummer: 17177989.5
(22) Anmeldetag: 27.06.2017
(51) Int. Cl.: F16H 57/08, F16H 1/28

(54) **PLANETENTRÄGER, GIESSVERFAHREN UND PLANETENGETRIEBE**
PLANET CARRIER, CASTING METHOD AND PLANETARY GEAR
PORTE-SATELLITES, PROCÉDÉ DE COULÉE ET ENGRENAGE PLANÉTAIRE

(43) Veröffentlichungstag der Anmeldung: 02.01.2019
(73) Patentinhaber: Flender GmbH, 46395 Bocholt (DE)
(72) Erfinder: Klein-Hitpass, Arno, 52074 Aachen (DE); Böggering, Markus, 46399 Bocholt (DE); Janßen, Kathrin, 46514 Schermbeck (DE)
(74) Vertreter: Michalski Hüttermann & Partner Patentanwälte mbB

(56) Entgegenhaltungen:
- EP-A1- 1 186 804
- EP-A2- 1 281 442
- WO-A1-2005/016576
- DE-U1-202012 004 029

## Beschreibung

Die Erfindung betrifft einen Planetenträger für ein Planetengetriebe und ein Gießverfahren zur Herstellung eines Gussbauteils, insbesondere eines erfindungsgemäßen Planetenträgers. Die Erfindung betrifft auch ein Planetengetriebe, das mit einem entsprechenden Planetenträger ausgestattet ist.

Aus der Druckschrift WO 2005/016576 A1 ist ein Gussbauteil bekannt, das eine Achsfaust, mehrere Rails und einen Flansch umfasst. Die Wandstärken der dieser Komponenten nehmen von einer Angussseite in Richtung der Achsfaust kontinuierlich ab und sind beispielsweise gemäß der sogenannten Heuver'sehen Kreismethode ausgebildet. Bei der Herstellung des Gussbauteils werden mehrere Angusstrichter eingesetzt.

Die Europäische Patentanmeldung EP 1 186 804 A1 offenbart einen Planetenträger, der zwei gegenüberliegende Wangen aufweist, die durch eine Mehrzahl an Stegen miteinander verbunden sind. In den Wangen des Planetenträgers sind Bohrungen ausgebildet, die Sitze für Planetenradbolzen bilden. Zwischen den Bohrungen sind die Wangen und die Stege abgeschrägt ausgebildet. Zwischen dem abgeschrägten Bereich und den Stegen liegt jeweils die größte Materialhäufung des Planetenträgers vor.

Aus DE 20 2012 004 029 U1 ist ein Planetenträger bekannt, der eine zwei gegenüberliegende Wangen aufweist und Stege, die die Wangen miteinander verbinden. An einem Übergang von einer Wange, die unmittelbar mit einer langen Nabe verbunden ist, zu einem Steg liegt die größte Materialhäufung des Planetenträgers vor.

Das Dokument WO 2005/016576 A1 offenbart ein Gussbauteil und ein Verfahren zu dessen Herstellung. Beim Gießen des darin Gussbauteils wird eine Mehrzahl an Angusstrichtern eingesetzt um so eine gußoptimale Befüllung bestimmter Partien des Gussbauteil mit Schmelze zu erzielen.

Darüber hinaus ist die Heuver'sche Kreismethode bekannt, gemäß der Gussbauteile ausgestaltet werden, um einer Warmrissneigung entgegenzuwirken. Die Heuver'sche Kreismethode basiert auf der Chvorinov'schen Regel, die einen Zusammenhang zwischen einer Erstarrungszeit eines Gussbauteils, dessen Volumen und dessen Oberfläche definiert.

Ein Nachteil an bekannten Gussverfahren besteht darin, dass diese bei entsprechender Gussbauteilgeometrie den Einsatz von Kühlwerkzeugen, beispielsweise Kühleisen oder Außenkokillen, erfordern um eine Erstarrung zu gewährleisten, die ein ausreichendes Maß an Fertigungsqualität bietet. Die Verwendung von Kühlwerkzeugen ist aufwendig und zeitintensiv. Es besteht Bedarf an Gussbauteilen, die schnell und einfach herstellbar sind und gleichzeitig eine hohe mechanische Belastbarkeit bieten. Ein solcher Bedarf besteht insbesondere für Planetenträger von Planetengetrieben.

Der Erfindung liegt die Aufgabe zugrunde, einen Planetenträger und ein Gießverfahren bereitzustellen, die die oben skizzierten Nachteile aus dem Stand der Technik überwinden.

Die skizzierte Aufgabenstellung wird durch den erfindungsgemäßen Planetenträger mit den Merkmalen des Anspruchs 1 gelöst. Der Planetenträger umfasst eine erste und zweite Nabe, die dazu ausgebildet sind, den Planetenträger in einem Planetengetriebe drehbar um eine Hauptdrehachse zu lagern. An jede der beiden Naben grenzt eine Verschlusswandung an, die im Wesentlichen kreisförmig ausgebildet ist und entlang einer Axialrichtung den Raum begrenzt, in dem im Planetenträger im Betrieb die Planetenräder aufgenommen sind. Im erfindungsgemäßen Planetenträger liegen die Verschlusswandungen im Wesentlichen parallel ausgerichtet gegenüber. Zwischen den Verschlusswandungen ist zumindest ein Steg ausgebildet, der einstückig mit der ersten und zweiten Verschlusswandung ausgebildet ist und diese miteinander verbindet. In einem Halbschnitt entlang der Axialrichtung betrachtet liegt die größte Materialanhäufung des Planetenträgers in einem Bereich des Stegs, der während des bestimmungsgemäßen Betriebs des Planetenträgers einer reduzierten mechanischen Beanspruchung unterliegt. Unter einer reduzierten mechanischen Beanspruchung sind dabei Beanspruchungen, insbesondere mechanische Spannungen, zu verstehen, die eine Beanspruchungsgrenze des für den Planetenträger eingesetzten Materials substantiell unterschreiten. Im Bereich der reduzierten mechanischen Beanspruchung liegt dabei, bezogen auf den Planetenträger als Ganzes, eine verringerte Ausnutzung der mechanischen Tragfähigkeit des eingesetzten Materials vor.

Der Steg liegt in einem mittleren Abschnitt des Planetenträgers. Bei einem Erstarrungsvorgang bei der Herstellung des Planetenträgers über ein Gießverfahren befindet sich im Bereich der größten Materialhäufung zumindest ein Erstarrungs-Endpunkt. Ferner treibt eine Erstarrungsfront Fehlstoffe vor sich her, die in einem erstarrten Gussbauteil die Qualität des eingesetzten Materials lokal herabsetzt. Dadurch liegt im Bereich der größten Materialhäufung im beanspruchten Planetenträger eine erhöhte Konzentration von Fehlstoffen vor. Ebenso besteht im Bereich eines Erstarrungsendpunktes die stärkste Neigung zur Entstehung von Ungänzen, beispielsweise Lunker. Die Formgebung des erfindungsgemäßen Planetenträgers erlaubt es, einen Bereich mit einer reduzierten Materialgüte bei der Herstellung in einem Gießverfahren dort entstehen zu lassen, in dem die reduzierte Materialgüte nur vernachlässigbare Auswirkungen auf die Belastbarkeit des Planetenträgers im bestimmungsgemäßen Betrieb hervorruft. Die Herstellung des erfindungsgemäßen Planetenträgers in einem Gießverfahren erfordert einen reduzierten Einsatz von Kühlwerkzeugen, also beispielweise Kühleisen und Außenkokillen, oder auch Speisern. In bevorzugten Ausführungsformen der Erfindung ist die Verwendung von von Kühlwerkzeugen sogar entbehrlich. Dadurch ist der erfindungsgemäße Planetenträger schnell, kosteneffizient und einfach herstellbar und bietet ein hohes Maß an Belastbarkeit und Zuverlässigkeit.

Erfindungsgemäß ist die größte Materialanhäufung der Bereich des Planetenträgers, in den das größte Heuver-Element einbeschreibbar ist. Ein Heuver-Element ist hierbei ein Kreis oder eine Kugel gemäß der sogenannten Heuver'schen Kreismethode. Infolgedessen liegt im Bereich der größten Materialanhäufung auch mindestens ein Erstarrungs-Endpunkt. Beim Erstarren der Form des beanspruchten Planetenträgers entstehen somit an den axialen Enden der Naben Erstarrungsstartpunkte, die eine Erstarrungsfront ausbilden, die sich zu den Erstarrungs-Endpunkten bewegt. Entlang des Wegs von den Erstarrungs-Startpunkten zu den Erstarrungs-Endpunkten sind Heuver-Elemente von zunehmendem Durchmesser in die Form des Planetenträgers einbeschreibbar. Hierdurch ist in den Naben, den Verschlusswandungen und die mindestens einen Steg eine lunkerarme oder lunkerfreie Erstarrung gewährleistet, die eine hohe Materialgüte bietet. Hierdurch wird gewährleistet, dass der Punkt der letzten Erstarrung im Planetenträger gezielt im Bereich der größten Materialhäufung auftritt, wo ausreichend Material vorhanden ist, um trotz Materialschwächungen ein ausreichendes Maß an Stabilität zu bieten. Insgesamt erlaubt die erfindungsgemäße Verwendung der Heuver'schen Kreismethode, die räumliche Trennung von Bereichen mit erhöhter Beanspruchung und Erstarrungs-Endpunkten.

In einer Ausführungsform des beanspruchten Planetenträgers liegt die größte Materialhäufung im Bereich eines Übergangs vom Steg zu einer der Verschlusswandungen. Dadurch wird das Konzept einer Platzierung eines Bereichs mit reduzierter Materialgüte in einen mechanisch nur gering beanspruchten Bereich weiterverfolgt. Die damit einhergehenden Vorteile werden so in einem gesteigerten Maß erzielt.

Des Weiteren kann im beanspruchten Planetenträger die größte Materialhäufung in Bereich des Übergangs vom Steg zur ersten Verschlusswandung liegen, die in die erste Nabe übergeht. Die erste Nabe weist eine höhere Länge entlang der Axialrichtung des Planetenträgers als die zweite Nabe auf. Die erste Nabe bildet somit eine lange Nabe und die zweite Nabe eine kurze Nabe. Der Übergang von Steg zur ersten Verschlusswandung liegt entlang der Axialrichtung im Wesentlichen in einem mittleren Abschnitt des Planetenträgers. Hierdurch kann im mittleren Abschnitt die erste Verschlusswandung dickwandiger ausgebildet sein als die zweite Verschlusswandung. Eine dickwandige erste Verschlusswandung bietet ein hohes Maß an Stabilität und dient mechanisch als Basis für die daran angeformten dünnwandigeren Komponenten des Planetenträgers, wie beispielsweise die Naben. In der beschriebenen Ausführungsform werden die bereits skizzierten Vorteile des beanspruchten Planetenträgers in besonderem Maß erzielt.

Darüber hinaus kann die größte Materialhäufung in einem Bereich des Planetenträgers liegen, in der während des bestimmungsgemäßen Betriebs die geringste mechanische Beanspruchung vorliegt. Die Wirkung einer Ungänze in Verbindung mit einer lokalen Konzentration von Fehlstoffen besteht in einer Verringerung der mechanischen Beanspruchbarkeit des eingesetzten Materials. Der Bereich mit der niedrigsten mechanischen Beanspruchung bietet daher die größte Reserve in puncto Festigkeit, bzw. Beanspruchbarkeit. Hierdurch wird einem mechanischen Versagen des Planetenträgers infolge von gießtechnisch bedingten Materialschwächungen vorgebeugt und so die Zuverlässigkeit des Planetenträgers gesteigert.

Ferner kann der Steg eine Wandstärke aufweisen, die entlang der Axialrichtung des Planetenträgers von der zweiten Nabe zur ersten Nabe hin zunimmt. Dabei ist der Steg vorzugsweise massiv ausgebildet. Der Steg weist damit in Richtung der ersten Nabe eine zunehmende Steifigkeit auf. Dies umfasst sowohl eine erhöhte Biegesteifigkeit gegen eine radiale Beanspruchung des Stegs als auch eine erhöhte Torsionssteifigkeit. Eine Stegwandung ist dabei vorzugsweise gegenüber der Hauptdrehachse des Planetenträgers im Wesentlichen geneigt ausgebildet. Die Zunahme der Wandstärke des Stegs erfolgt dadurch in den von den Verschlusswandungen begrenzten lichten Raum hinein. Dies erlaubt es, die Übergänge jeweils von den Verschlusswandungen auf die Naben mit erhöhten Radien auszubilden, um so Spannungskonzentrationen zu reduzieren und somit den Auslastungsgrad des gesamten Bauteils zu erhöhen.

Des Weiteren kann im beanspruchten Planetenträger der Steg im Wesentlichen eine Pyramidenstumpfform oder eine Tetraederstumpfform auf. Alternativ kann der Steg auch im Wesentlichen eine Kegel- oder Ellipsoidenstumpfform aufweisen. Diese Stumpfformen sind zur zweiten Nabe hin verjüngend ausgebildet. Durch die Pyramiden-, Ellipsoid- oder Tetraederstumpfform liegt zwischen Stegen eine Öffnung vor, die eine Trapezform aufweist. Die Trapezform der Öffnungen bietet in Umfangsrichtung Raum für die Montage der Planetenräder bei gleichzeitig hoher Steifigkeit der Stege.

Vorzugsweise ist der Planetenträger mit einer Mehrzahl an Stegen ausgestattet, die die erste mit der zweiten Verschlusswandung verbinden. Weiter bevorzugt liegt, im Querschnitt betrachtet, zwischen den Stegen im Planetenträger ein im Wesentlichen gleicher Winkelabstand vor. Dadurch wird eine im Wesentlichen gleichmäßige Steifigkeitsverteilung, und im bestimmungsgemäßen Betrieb erzielt. Gleichzeitig wird eine im Wesentlichen gleichmäßige Spannungsverteilung erzielt. Eine Beanspruchungskonzentration im Bereich der größten Materialanhäufung wird so vermieden und einem mechanischen Versagen entgegengewirkt.

Ferner kann mindestens eine Stegwandung eines Stegs gegenüber einer Hauptdrehachse des Planetenträgers einen Winkel aufweisen, der in Axialrichtung geöffnet ist. Bevorzugt weisen gegenüberliegende Stegwandungen jeweils einen entsprechenden Winkel auf. Vorzugsweise sind dabei die Winkel der beiden gegenüberliegenden Stegwandungen gleich groß, so dass eine gleichmäßige Stumpfform des Stegs gewährleistet ist. Alternativ können beide Winkel auch unterschiedlich groß ausgebildet sein. Die Winkel sind dabei in Abhängigkeit von einer Vorzugsdrehrichtung des Planetenträgers gewählt. Hierdurch ist die Konstruktion des Planetenträgers auch an strukturmechanische Anforderungen anpassbar.

Die skizzierte Aufgabenstellung wird auch durch das erfindungsgemäße Verfahren zur Herstellung eines Gussbauteils gelöst. Darin wird eine Gussform bereitgestellt, in die während des Verfahrens Schmelze eingegossen wird. Bei der Schmelze handelt es sich beispielsweise um einen metallischen Werkstoff, vorzugsweise Gussstahl. Durch die Gussform wird die Form des herzustellenden Gussbauteils vorgegeben. Zu jedem Formaspekt des herzustellenden Gussbauteils liegt entsprechend eine geeignete Formgebung der Gussform vor. Jegliche Beschreibung des Gussbauteils gilt deshalb analog auch für die Gussform. Erfindungsgemäß weist das Gussbauteil seine größte Materialanhäufung in einem Bereich auf, der im Betrieb einer reduzierten mechanischen Beanspruchung unterliegt. Unter einer reduzierten mechanischen Beanspruchung sind hierbei mechanische Spannungen zu verstehen, die erheblich niedriger sind als die Beanspruchbarkeitsgrenze des eingesetzten Materials bzw. Werkstoffs im erstarrten und erkalteten Zustand. Im Bereich der größten Materialanhäufung liegt auch ein Erstarrungs-Endpunkt des Gussbauteils. Eine Erstarrungsfront, die an einem Erstarrungs-Endpunkt endet, fördert Fehlstoffe, von denen im erstarrten Zustand eine lokal erhöhte Konzentration im Bereich der größten Materialanhäufung vorliegt. Ebenso besteht an einem Erstarrungs-Endpunkt eine erhöhte Neigung zur Entstehung von Ungänzen, beispielsweise Lunker. Eine lokal erhöhte Konzentration von Fehlstoffen in Verbindung mit Ungänzen führt an der entsprechenden Stelle zu einer eingeschränkten Festigkeit des eingesetzten Materials.

Im erfindungsgemäßen Verfahren werden diese schwierig quantitativ prognostizierbaren Materialschwächungen gezielt in einen Bereich gelegt, der nur reduzierten mechanischen Beanspruchungen ausgesetzt ist. Damit bietet dieser Bereich mit reduzierten mechanischen Beanspruchungen die maximalen Festigkeitsreserven, die zum Teil durch diese Materialschwächungen aufgezehrt werden. Hierdurch wird wiederum bei einem Gussbauteil, das mittels des erfindungsgemäßen Verfahrens hergestellt ist, lokal die Werkstoffausnutzung erhöht. Ferner sind im erfindungsgemäßen Verfahren Kühlwerkzeuge und/oder Speiser nur in reduziertem Umfang notwendig oder vorzugsweise vollständig entbehrlich. Das erfindungsgemäße Verfahren bietet für die damit hergestellten Gussbauteile ein erhöhtes Maß an Fertigungsqualität und kann in einfacher Weise schnell durchgeführt werden.

In einer weiteren Ausführungsform des Verfahrens weist das Gussbauteil nach der Erstarrung im Bereich der größten Materialanhäufung Ungänzen auf. Der Bereich der größten Materialanhäufung ist hierbei auch der Bereich, in dem der Punkt der letzten Erstarrung liegt. Die Ungänzen stellen Materialschwächungen dar, die die mechanische Beanspruchbarkeit des Gussbauteils lokal reduzieren. Die Form des Gussbauteils erwirkt, dass dieser Bereich, in dem die stärkste Neigung zur Bildung von Ungänzen vorliegt, auch in einem Bereich der geringsten mechanischen Beanspruchung liegt. Dadurch sind die Materialschwächungen, die infolge der Ungänzen eintreten, in einem Bereich konzentriert, wo ausreichende Festigkeitsreserven vorhanden sind, und somit nur eine reduzierte Gefahr eines mechanischen Versagens vorliegt. Darüber hinaus kann mittels des beanspruchten Verfahrens das Auftreten von Ungänzen gezielt in gewählte Bereiche des Planetenträgers gelenkt werden. Die Oberflächen des Gussbauteils sind im Wesentlichen eben ausgebildet. Eine ebene Oberfläche stellt einen günstigen Ort für eine zerstörungsfreie Materialprüfung, beispielsweise eine Ultraschallprüfung, dar. Insbesondere lässt das beanspruchte Verfahren Ungänzen in Bereichen auftreten, deren abgewandte Seite, also die entsprechende Rückseite des Gussbauteils, ebenfalls im Wesentlichen eben ausgebildet ist. Derartige Stellen sind für Werkzeuge zur zerstörungsfreien Materialprüfung vorteilhaft und führen im Zusammenwirken mit der ebenen abwandten Seite besonders geeignete Echoflächen, was zu genauen Auswertungsergebnissen führt. Die mit dem beschriebenen Verfahren hergestellten Gussbauteile können somit einfach inspizierbar ausgebildet werden, was den gesamten Fertigungsprozess der Gussbauteile weiter vereinfacht und beschleunigt.

Darüber hinaus kann im beanspruchten Verfahren zu Beginn der Erstarrung, in einem Halbschnitt des Gussbauteils betrachtet, eine Mehrzahl an Erstarrungs-Startpunkten vorliegen. Erstarrungs-Startpunkte treten in Bereichen mit einem niedrigen Erstarrungsmodul, also dem Verhältnis von Gussstückvolumen zu wärmeabführender Gussstückoberfläche, vor. Erstarrungs-Startpunkte liegen somit beispielweise im Bereich von filigranen Querschnittsenden. Im beanspruchten Verfahren verläuft die Erstarrung, also die Erstarrungsfront, damit von mehreren Erstarrungs-Startpunkten zu einem gemeinsamen Erstarrungs-Endpunkt, der im Bereich der größten Materialanhäufung liegt. Das so beschriebene Verhalten der Erstarrungsfront, der Erstarrungs-Startpunkte und -Endpunkte basiert auf einer modellhaften Darstellung im Halbschnitt. Die Beschreibung gilt analog für dreidimensionale Bauteile, die eine Vielzahl an derartigen Halbschnitten aufweist, beispielsweise im Wesentlichen rotationssymmetrische Gussbauteile. Alternativ können auch jeweils mehrere Erstarrungs-Startpunkte zu mehreren Erstarrungs-Endpunkten führen. Diese Erstarrungs-Endpunkte liegen beanstandet zueinander in Bereichen separater Materialanhäufungen.

Ferner kann das Gussbauteil, das mit dem beanspruchten Verfahren hergestellt wird, ein Planetenträger eines Planetengetriebes sein. Bei der Geometrie eines Planetenträgers werden die oben skizzierten Vorteile des beanspruchten Verfahrens in besonderem Ausmaß erzielt. Die technischen Merkmale des beanspruchten Verfahrens sind deshalb mit den technischen Merkmalen des beanspruchten Planetenträgers kombinierbar. Beim herzustellenden Gussbauteil kann es sich jedoch auch um jegliches Getriebebauteil, beispielsweise in einem Stirnradgetriebe für Industrieanwendungen oder für Kraftfahrzeuge handeln.

Die zugrundeliegende Aufgabenstellung wird auch durch ein erfindungsgemäßes Planetengetriebe gelöst, das ein Hohlrad umfasst, in dem Planetenräder laufen. Die Planetenräder sind drehbar in einem Planetenträger aufgenommen, der wiederum mit einer Sonnenradwelle gekoppelt ist. Der Planetenträger ist gemäß zumindest einer der oben skizzierten Ausführungsformen ausgebildet. Der Planetenträger bietet ein hohes Maß an Stabilität und Zuverlässigkeit. Der Planetenträger selbst ist gewichtssparend und erlaubt es so, auch das Gewicht des zugehörigen Planetengetriebes zu reduzieren. Gleichzeitig ist der Planetenträger in einem einfachen Gießverfahren herstellbar. Dieses Gießverfahren ist gemäß mindestens einer der oben beschriebenen Ausführungsformen ausgebildet. Das Gießverfahren ist schnell, zuverlässig und kosteneffizient durchführbar und gewährleistet eine hohe Fertigungsqualität.

Die Erfindung wird im Folgenden anhand von Figuren einzelner Ausführungsformen beschrieben. Die Merkmale der Figuren sind dabei ohne Weiteres untereinander kombinierbar. Es zeigt im Einzelnen:
- FIG 1: in einer geschnittenen Schrägansicht einen Erstarrungsvorgang eines gegossenen Planetenträgers bei einem Herstellungsverfahren gemäß dem Stand der Technik;
- FIG 2, 3: im Längsschnitt und in einer Seitenansicht eine Ausführungsform eines erfindungsgemäßen Planetenträgers;
- FIG 4, 5: im Längsschnitt und in einer Seitenansicht den Ablauf eines Erstarrungsvorgangs in einer Ausführungsform des erfindungsgemäßen Verfahrens;
- FIG 6: schematisch den Ablauf einer Ausführungsform des erfindungsgemäßen Herstellungsverfahrens;
- FIG 7: schematisch den Aufbau einer Ausführungsform des erfindungsgemäßen Planetengetriebes.

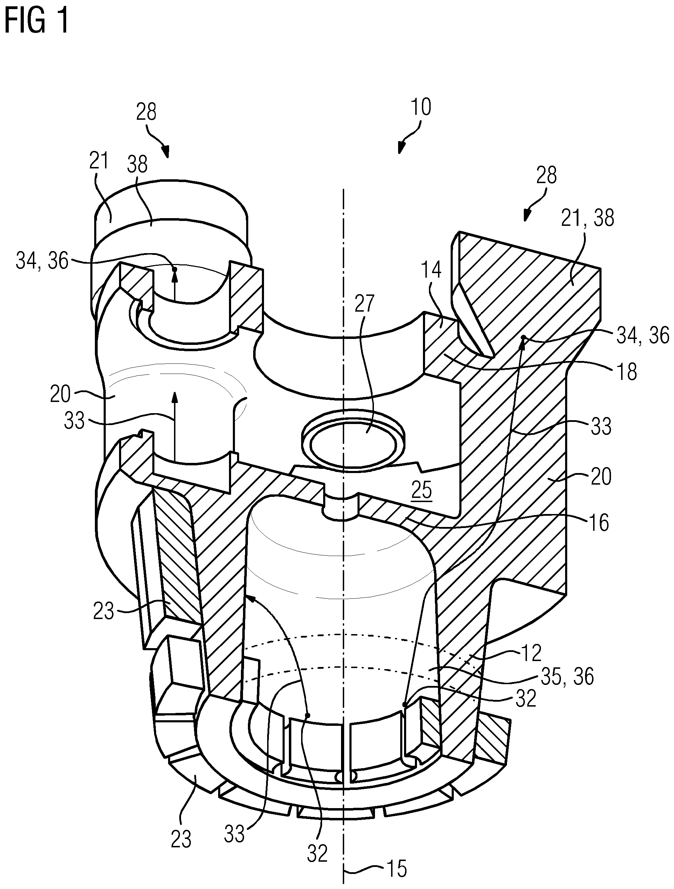

FIG 1 zeigt schematisch in einer geschnittenen Schrägansicht einen Erstarrungsvorgang bei der Herstellung eines Planetenträgers 10 gemäß einem Gießverfahren aus dem Stand der Technik. Der Planetenträger 10 umfasst eine erste Nabe 12, die als lange Nabe 12 ausgebildet ist. Auf der axial entgegengesetzten Seite befindet sich eine zweite Nabe 14, die als kurze Nabe 14 ausgebildet ist. Unter einer axialen Richtung ist dabei eine Richtung entlang der Hauptdrehachse 15 des Planetenträgers 10 zu verstehen. Die erste und zweite Nabe 12, 14 gehen in eine erste bzw. zweite Verschlusswandung 16, 18 über, die wiederum einen lichten Innenraum 25 axial begrenzen. Die Verschlusswandungen 16, 18 sind durch Stege 20 miteinander verbunden. In der zweiten Verschlusswandung 18 ist eine Bohrung 27 zur Aufnahme einer nicht dargestellten Planetenradachse ausgebildet. Ferner ist an der ersten Nabe 12 eine Mehrzahl an Kühlwerkzeugen 23, nämlich Kühleisen 23 angebracht, die dazu ausgebildet sind, den Erstarrungsvorgang gezielt zu beeinflussen. Des Weiteren sind im Bereich der zweiten Nabe 14 zwei Speiser 21 angeordnet, durch die bei der Herstellung des Planetenträgers 10 Schmelze 28 thermisch beeinflusst wird.

FIG 1 zeigt auch zwei Erstarrungs-Startunkte 32, denen eine Erstarrungsfront 35 ausgeht. Durch Pfeile ist jeweils lokal die Bewegung 33 der Erstarrungsfront 35 abgebildet. Die Bewegung 33 der Erstarrungsfront 35 endet jeweils in einem Erstarrungs-Endpunkt 34, die innerhalb eines Speisers 21 endet. Die Erstarrungsfront 35 treibt, also transportiert, Fehlstoffe 36, die im erstarrten Zustand lokal die Materialgüte im Planetenträger 10 reduzieren. In der Umgebung der Erstarrungs-Endpunkte 34 liegt nach Ablauf des Erstarrungsvorgangs lokal eine erhöhte Konzentration an Fehlstoffen vor. Die Fehlstoffe umfassen beispielsweise Schlacke und Formstoffteilchen. Ebenfalls liegen im Speiser 21 nach dem Erstarrungsvorgang Ungänzen 38 vor.

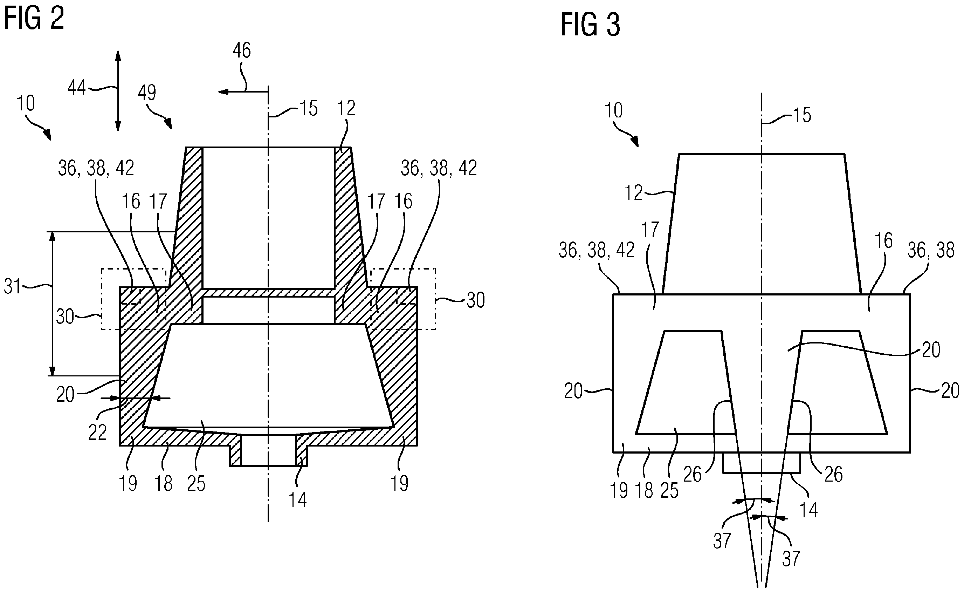

In FIG 2 und FIG 3 ist im Längsschnitt und in einer Seitenansicht der Aufbau einer Ausführungsform des erfindungsgemäßen Planetenträgers 10 dargestellt. Der Planetenträger 10 ist um eine Hauptdrehachse 15 drehbar ausgebildet und umfasst eine erste und eine zweite Nabe 12, 14. Die erste Nabe 12 ist als sogenannte lange Nabe ausgebildet und die zweite Nabe 14 als sogenannte kurze Nabe. Die erste Nabe 12 weist eine höhere Wandstärke auf als die zweite Nabe 14. Die erste Nabe 12 geht in eine erste Verschlusswandung 16 über und die zweite Nabe 14 in eine zweite Verschlusswandung 18. Im Bereich der ersten Verschlusswandung 16 ist eine Abschlusswand 29 ausgebildet, die den lichten Raum 25 einseitig axial abschließt. Die Abschlusswand 29 ist im Wesentlichen dünnwandig ausgebildet und dazu geeignet, bei einer Erstarrung der Schmelze 28 als Kühlrippe zu dienen. Die beiden Verschlusswandungen 16, 18 sind durch Stege 20 miteinander verbunden. Die Verschlusswandungen 16, 18 begrenzen entlang einer Axialrichtung 44 einen lichten Innenraum 25, der zur Aufnahme von nicht dargestellten Planetenrädern vorgesehen ist. Der lichte Innenraum 25 wird von den Stegen 20 teilweise entlang einer Radialrichtung 46 begrenzt. Zwischen der ersten Nabe 12, der ersten Verschlusswandung 16 und den Stegen 20 liegt ein erster Übergangsbereich 17 vor. Gleichermaßen liegt zwischen der zweiten Verschlusswandung 18 und den Stegen 20 ein zweiter Übergangsbereich 19 vor.

Beim ersten Übergangsbereich 17 liegt im Planetenträger 10 gemäß FIG 1 die größte Materialanhäufung 30 vor, die um die Hauptdrehachse 15 herum umlaufend ausgebildet ist. Im Bereich der größten Materialanhäufung 30 liegt auch ein Bereich 42, in im bestimmungsgemäßen Betrieb die geringste mechanische Beanspruchung des Planetenträgers vorliegt. Darunter sind die mechanischen Beanspruchungen zu verstehen, die sich aus dem Zusammenspiel von Kräften ergibt, die von einer nicht näher dargestellten Sonnenradwelle und nicht näher dargestellten Planetenrädern auf den Planetenträger ausgeübt werden. Im Bereich 42 der geringsten mechanischen Beanspruchung liegen Ungänzen 38 vor, die bei der Herstellung des Planetenträgers 10 entstehen. Gleichermaßen liegt im Bereich 42 der geringsten mechanischen Beanspruchung eine erhöhte Konzentration von Fehlstoffen 36 vor. Sowohl die Ungänzen 38 als auch die Fehlstoffe 36 stellen lokale Materialschwächungen des Planetenträgers 10 dar. Dadurch, dass der Bereich 42 der geringsten mechanischen Beanspruchung zumindest teilweise im Bereich der größten Materialanhäufung 30 liegt, ergibt sich durch diese lokalen Materialschwächungen nur ein reduziertes Risiko eines mechanischen Versagens des Planetenträgers 10 an dieser Stelle.

Die Stege 20, die die erste mit der zweiten Verschlusswandung 16, 18 verbinden, weisen eine veränderliche Wandstärke 22 auf. Die Wandstärke 22 der Stege 20 nimmt von der zweiten Nabe 14 in Axialrichtung 44 zur ersten Nabe 12 hin zu. Durch die so zunehmende Wandstärke 22 wird die Lage der größten Materialanhäufung 30 in einem axial mittleren Bereich 31 festgelegt. Des Weiteren weist zumindest eine Stegwandung 26 gegenüber der Hauptdrehachse 15 einen Winkel 37 auf, der in Axialrichtung 44 zur ersten Nabe 12 hin geöffnet ist. Durch die zur ersten Nabe 12 hin zunehmenden Wandstärke 22 der Stege 20 und den Winkel 37 weisen die Stege 20 jeweils eine Pyramidenstumpfform auf.

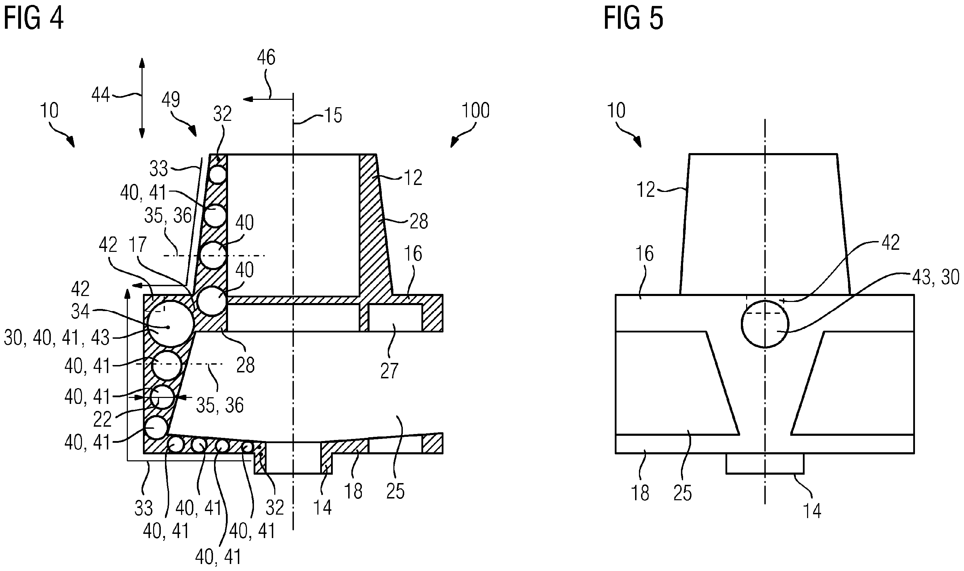

FIG 4 und FIG 5 zeigen in einem Halbschnitt und einer Seitenansicht einen Erstarrungsvorgang bei der Herstellung einer Ausführungsform des erfindungsgemäßen Planetenträgers 10. Der Planetenträger 10 gemäß FIG 4 entspricht dem Planetenträger 10 aus FIG 2 und FIG 3. Es handelt sich um denselben Planetenträger 10 aus unterschiedlichen Perspektiven bzw. in unterschiedlichen Schnittebenen. Gleiche Bezugszeichen haben in FIG 2 bis FIG 5 damit auch die gleiche technische Bedeutung.

FIG 4 und FIG 5 gehen davon aus, dass die Schmelze 28 aus die der Planetenträger 10 zu bilden ist, bereits im Rahmen des erfindungsgemäßen Herstellungsverfahren 100 in eine nicht näher dargestellte Gussform 49 eingefüllt ist und durch Wärmeabgabe die Erstarrung einsetzt. Im Bereich der zweiten Nabe 14 liegt lokal ein niedriger Erstarrungsmodul vor, so dass dort die Erstarrung einsetzt. Es entsteht ein Erstarrungs-Startpunkt 32, von dem aus sich eine Erstarrungsfront 35 bildet, die sich durch den Planetenträger 10 bewegt. Mit einem Pfeil ist hierbei die Bewegung 33 der Erstarrungsfront 35 abgebildet. Gleichermaßen liegt an einem Ende der ersten Nabe 12 auch ein niedriger Erstarrungsmodul vor, so dass sich dort auch ein Erstarrungs-Startpunkt 32 bildet. Auch vom Erstarrungs-Startpunkt 32 in der ersten Nabe 12 ausgehend bildet sich eine Erstarrungsfront 35, deren Bewegung 33 auch durch einen Pfeil abgebildet ist. Entlang der Bewegung 33 der Erstarrungsfront 35 sind sogenannte Heuver-Elemente 40 in die Kontur des Planetenträgers 10 einbeschrieben. Bei den Heuver-Elementen 40 handelt es sich in FIG 4 um Heuver-Kreise 41, die wiederum zweidimensionale Projektionen der jeweiligen Heuver-Elemente 40 sind. Das Heuver-Element 40 stellt im dreidimensionalen Raum eine Kugel dar, die in die Kontur des Planetenträgers 10 einbeschrieben ist. Gemäß der Heuver'schen Kreismethode weisen die Heuver-Kreise 41 entlang der Bewegung 33 der Erstarrungsfront 35 einen zunehmenden Durchmesser auf. Dies wird unter anderem dadurch herbeigeführt, dass der Steg 20 im Wesentlichen als zur ersten Nabe 12 hin größer werdender Pyramidenstumpf ausgebildet ist. Es wird so eine gleichmäßige Erstarrung, und damit eine hohe Materialgüte bei der Herstellung gewährleistet. Die Erstarrungsfront 35 fördert ferner Fehlstoffe 36 entlang der Bewegung 33 der Erstarrungsfront 35 mit. Die beiden Erstarrungsfronten 35, die von der ersten und zweiten Nabe 12, 14 ausgehen, treffen sich im Bereich der höchsten Materialanhäufung 30, in der das größte Heuver-Element 43 vorliegt. Es entsteht ein Erstarrungs-Endpunkt 34, der den Punkt der letzten Erstarrung bildet. Die größte Materialanhäufung 30 liegt im Bereich der geringsten mechanischen Beanspruchung 42, die im bestimmungsgemäßen Betrieb auftritt. Diese tritt radial außen in einem Übergangsbereich 17 zwischen der ersten Nabe 12 und dem angrenzenden Steg 20 auf. Beim Erstarrungs-Endpunkt 34 liegen Ungänzen 38 vor. Gleichzeitig liegt im Bereich des Erstarrungs-Endpunkts 34 eine erhöhte Konzentration an Fehlstoffen 36 vor, die durch die Erstarrungsfronten 35 zum größten Heuver-Element 43 transportiert sind. Die infolge der Ungänzen 38 und der Fehlstoffe 36 vorliegende lokale Materialschwächung im Bereich 42 der geringsten mechanischen Beanspruchung führen lediglich zu einer unkritischen Reduzierung der Festigkeit des Planetenträgers 10 an dieser Stelle.

Die Erstarrung gemäß FIG 4 kommt ohne zusätzliche Kühlwerkzeuge, wie beispielsweise Kühleisen oder Außenkokillen aus und ist deshalb schnell und einfach umsetzbar. Ebenso wird der Planetenträger 10 in FIG 4 und FIG 5 ohne Speiser hergestellt. Die Fertigung des Planetenträgers 10 ist dadurch kosteneffizient umsetzbar. Gleichzeitig bietet der so hergestellte Planetenträger 10 ein hohes Maß an Festigkeit und Zuverlässigkeit.

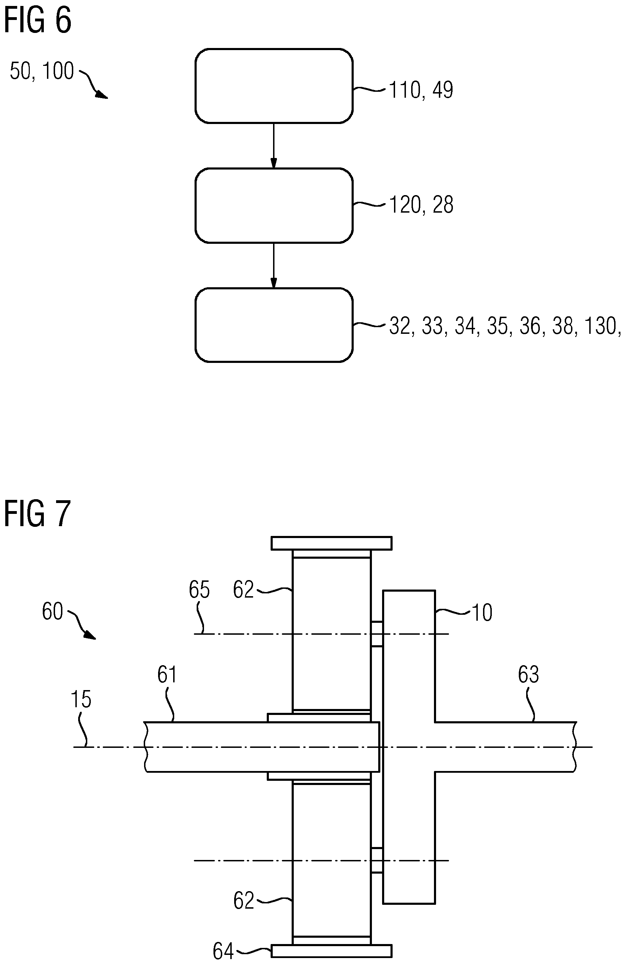

In FIG 6 ist schematisch der Ablauf einer Ausführungsform des beanspruchten Herstellungsverfahrens 100 abgebildet, mit dem ein Gussbauteil 50 herzustellen ist. In einem ersten Schritt 110 wird eine nicht näher abgebildete Gussform 49 bereitgestellt, durch die die Form des herzustellenden Gussbauteils 50 bestimmt ist. In einem zweiten Schritt erfolgt ein Einfüllen von Schmelze 28 in die Gussform 49. Es folgt ein dritter Schritt 130, in dem ein Erstarrungsvorgang abläuft. Ausgehend von Erstarrungs-Startpunkten 32 entstehen Erstarrungsfronten 35. Die Erstarrungsfronten 35 wiederum bewegen sich auf Erstarrungs-Endpunkte 34 zu, die wiederum innerhalb der Gussform des herzustellenden Gussbauteils 50 liegen. Bei der Bewegung 33 der Erstarrungsfronten 35 werden Fehlstoffe 36 transportiert, die nach dem dritten Schritt 130 im Bereich der Erstarrungs-Endpunkte 34 in erhöhter Konzentration vorliegen. Ferner entstehen Ungänzen 38 im Bereich der Erstarrungs-Endpunkte 34. Die Ungänzen 38 und die erhöhten Konzentrationen an Fehlstoffen 36 liegen dabei in zumindest einem Bereich 42 mit reduzierter mechanischer Beanspruchung. Dort sind die Materialschwächungen, die durch die Fehlstoffe 36 und die Ungänzen 38 hervorgerufen werden, für die Integrität des Gussbauteils 50 unkritisch.

Ferner ist eine Ausführungsform eines erfindungsgemäßen Planetengetriebes 60 in FIG 7 abgebildet. Das Planetengetriebe 60 umfasst eine Sonnenradwelle 61, die mit einer Mehrzahl an Planetenrädern 62 im Eingriff steht. Die Sonnenradwelle 61 ist dabei drehbar um eine Hauptdrehachse 15 gelagert. Die Planetenräder 62 sind drehbar um Planetenraddrehachsen 65 im Planetenträger 10 aufgenommen. Die Planetenräder 62 stehen im Eingriff mit einem Hohlrad 64, das die Planetenräder 62 umgibt. Der Planetenträger 10 ist ebenfalls um die Hauptdrehachse 15 drehbar. Ferner ist mit dem Planetenträger 10 eine Abtriebswelle 63 verbunden.

## Patentansprüche

1. Planetenträger (10), umfassend eine erste Nabe (12) mit einer angrenzenden ersten Verschlusswandung (16) und eine zweite Nabe (14) mit einer angrenzenden zweiten Verschlusswandung (18), wobei die erste und zweite Verschlusswandung (16, 18) gegenüberliegend angeordnet sind, und einen Steg (20) zur Verbindung der ersten Verschlusswandung (16) mit der zweiten Verschlusswandung (18), wobei die größte Materialhäufung (30) des Planetenträgers (10) in einem Bereich (42) des Stegs (20) liegt, der in einem bestimmungsgemäßen Betriebszustand des Planetenträgers (10) der geringsten mechanischen Beanspruchung unterliegt, **dadurch gekennzeichnet, dass** die erste und zweite Verschlusswandung (16, 18) und der Steg (20) Heuver-Elemente (40, 43) aufweisen, wobei das größte Heuver-Element (40, 43) des Planetenträgers (10) im Bereich der größten Materialhäufung (30), und dass im Bereich (42) der geringsten mechanischen Beanspruchung Ungänzen (38) vorliegen.

2. Planetenträger (10) nach Anspruch 1, **dadurch gekennzeichnet, dass** die größte Materialhäufung (30) im Bereich eines Übergangs vom Steg (20) zu einer der Verschlusswandungen (16, 18) liegt.

3. Planetenträger (10) nach Anspruch 2, **dadurch gekennzeichnet, dass** die größte Materialhäufung (30) im Bereich eines Übergangs vom Steg (20) zur ersten Verschlusswandung (16, 18) liegt.

4. Planetenträger (10) nach einem der Ansprüche 1 bis 3, **dadurch gekennzeichnet, dass** der Steg (20) eine Wandstärke (22) aufweist, die von der zweiten Nabe (14) zur ersten Nabe (12) hin zunimmt.

5. Planetenträger (10) nach einem der Ansprüche 1 bis 4, **dadurch gekennzeichnet, dass** der Steg (20) eine Stegwandung (26) aufweist, die im Wesentlichen gegenüber einer Hauptdrehachse (15) des Planetenträgers (10) ausgerichtet ist.

6. Planetenträger (10) nach einem der Ansprüche 1 bis 5, **dadurch gekennzeichnet, dass** der Steg (20) im Wesentlichen eine Pyramiden, Kegel-, Ellipsoid- oder Tetraederstumpfform aufweist.

7. Planetenträger (10) nach einem der Ansprüche 1 bis 6, **dadurch gekennzeichnet, dass** der Planetenträger (10) eine Mehrzahl an Stegen (20) aufweist, die die erste mit der zweiten Verschlusswandung (16, 18) verbinden.

8. Planetenträger (10) nach einem der Ansprüche 1 bis 6, **dadurch gekennzeichnet, dass** zwischen einer Hauptdrehachse (15) des Planetenträgers (10) und Stegwandungen (26) eines Stegs (20) jeweils ein Winkel (37) ausgebildet ist, wobei die Winkel (37) unterschiedlich groß sind.

9. Planetengetriebe (60), umfassend ein Hohlrad (64), eine Sonnenradwelle (61) und eine Mehrzahl an Planetenrädern (62), die in einem Planetenträger (10) drehbar aufgenommen sind, **dadurch gekennzeichnet, dass** der Planetenträger (10) gemäß einem der Ansprüche 1 bis 8 ausgebildet ist.

## Claims

1. Planet carrier (10), comprising a first hub (12) having an adjoining first closure wall (16) and a second hub (14) having an adjoining second closure wall (18), wherein the first and second closure wall (16, 18) are arranged opposite one another, and a web (20) for connecting the first closure wall (16) to the second closure wall (18), wherein the largest material accumulation (30) of the planet carrier (10) is situated in a region (42) of the web (20) that, in an as intended operating state of the planet carrier (10), is subjected to the smallest mechanical stress, **characterized in that** the first and second closure wall (16, 18) and the web (20) have Heuvers' elements (40, 43), wherein the largest Heuvers' element (40, 43) of the planet carrier (10) is present in the region of the largest material accumulation (30), and **in that** discontinuities (38) are present in the region (42) of the smallest mechanical stress.

2. Planet carrier (10) according to Claim 1, **characterized in that** the largest material accumulation (30) is situated in the region of a transition from the web (20) to one of the closure walls (16, 18).

3. Planet carrier (10) according to Claim 2, **characterized in that** the largest material accumulation (30) is situated in the region of a transition from the web (20) to the first closure wall (16, 18).

4. Planet carrier (10) according to one of Claims 1 to 3, **characterized in that** the web (20) has a wall thickness (22) which increases from the second hub (14) towards the first hub (12).

5. Planet carrier (10) according to one of Claims 1 to 4, **characterized in that** the web (20) has a web wall (26) which is oriented substantially with respect to a main axis of rotation (15) of the planet carrier (10).

6. Planet carrier (10) according to one of Claims 1 to 5, **characterized in that** the web (20) substantially has a truncated pyramid, cone, ellipsoid or tetrahedron shape.

7. Planet carrier (10) according to one of Claims 1 to 6, **characterized in that** the planet carrier (10) has a plurality of webs (20) which connect the first closure wall (16) to the second closure wall (18).

8. Planet carrier (10) according to one of Claims 1 to 6, **characterized in that** an angle (37) is formed in each case between a main axis of rotation (15) of the planet carrier (10) and web walls (26) of a web (20), wherein the angles (37) are of different size.

9. Planetary gear mechanism (60), comprising a ring gear (64), a sun gear shaft (61) and a plurality of planet gears (62) which are rotatably received in a planet carrier (10), **characterized in that** the planet carrier (10) is embodied according to one of Claims 1 to 8.

## Revendications

1. Porte-satellites (10), comprenant un premier moyeu (12) pourvu d'une première paroi de fermeture adjacente (16) et un deuxième moyeu (14) pourvu d'une deuxième paroi de fermeture adjacente (18), les première et deuxième parois de fermeture (16, 18) étant disposées l'une en face de l'autre, et une nervure (20) destinée à relier la première paroi de fermeture (16) à la deuxième paroi de fermeture (18), la plus grande accumulation de matière (30) du porte-satellites (10) étant située dans une zone (42) de la nervure (20) qui est soumise à la plus faible contrainte mécanique lorsque le porte-satellites (10) est dans un état de fonctionnement prévu, **caractérisé en ce que** les première et deuxième parois de fermeture (16, 18) et la nervure (20) comportent des éléments d'Heuver (40, 43), le plus grand élément d'Heuver (40, 43) du porte-satellites (10) étant situé dans la zone de plus grande accumulation de matière (30) et **en ce que** des discontinuités (38) sont présentes dans la zone (42) de moindre contrainte mécanique.

2. Porte-satellites (10) selon la revendication 1, **caractérisé en ce que** la plus grande accumulation de matière (30) est située dans la zone de transition de la nervure (20) à l'une des parois de fermeture (16, 18) .

3. Porte-satellites (10) selon la revendication 2, **caractérisé en ce que** la plus grande accumulation de matière (30) est située dans la zone de transition de la nervure (20) à la première paroi de fermeture (16, 18) .

4. Porte-satellites (10) selon l'une des revendications 1 à 3, **caractérisé en ce que** la nervure (20) a une épaisseur de paroi (22) qui augmente du deuxième moyeu (14) au premier moyeu (12).

5. Porte-satellites (10) selon l'une des revendications 1 à 4, **caractérisé en ce que** la nervure (20) comporte une paroi (26) qui est alignée sensiblement par rapport à un axe principal de rotation (15) du porte-satellites (10).

6. Porte-satellites (10) selon l'une des revendications 1 à 5, **caractérisé en ce que** la nervure (20) a sensiblement une forme de pyramide, de cône, d'ellipsoïde ou de tétraèdre tronqué.

7. Porte-satellites (10) selon l'une des revendications 1 à 6, **caractérisé en ce que** le porte-satellites (10) comporte une pluralité de nervures (20) qui relient la première à la deuxième paroi de fermeture (16, 18).

8. Porte-satellites (10) selon l'une des revendications 1 à 6, **caractérisé en ce qu'**un angle (37) est formé entre un axe de rotation principal (15) du porte-satellites (10) et les parois (26) d'une nervure (20), les angles (37) étant de dimensions différentes.

9. Engrenage planétaire (60), comprenant une couronne (64), un arbre de roue solaire (61) et une pluralité de roues planétaires (62) qui sont logées à rotation dans un porte-satellites (10), **caractérisé en ce que** le porte-satellites (10) est conçu selon l'une des revendications 1 à 8.
